# EUROPÄISCHE PATENTSCHRIFT

(11) **EP 2 507 616 B1**
(45) Veröffentlichungstag und Bekanntmachung des Hinweises auf die Patenterteilung: **10.07.2013**
(21) Anmeldenummer: 10784691.7
(22) Anmeldetag: 12.11.2010
(51) Int. Cl.: G01N 21/15, G01N 21/64, C12M 1/34, A23L 3/26

(54) **Sensorschutzvorrichtung**
Sensor protective device
Dispositif de protection de capteur

(30) Priorität: 01.12.2009 DE 102009056417
(43) Veröffentlichungstag der Anmeldung: 10.10.2012
(73) Patentinhaber: Sartorius Stedim Biotech GmbH, 37079 Göttingen (DE)
(72) Erfinder: WEISSHAAR, Stefan, 37139 Adelebsen (DE); BATES, Michael, Gloucestershire GL3 4PD (GB); PRADEL, Christian, 37589 Kalefeld-Sebexen (DE); LIMPERT, Volker, 34326 Morschen (DE)
(86) Internationale Anmeldenummer: PCT/EP2010/006917
(87) Internationale Veröffentlichungsnummer: WO 2011/066901

(56) Entgegenhaltungen:
- DE-U1-202007 005 399
- US-A1- 2007 185 472

## Beschreibung

Die Erfindung betrifft eine Sensorschutzvorrichtung für optische Sensoren. Optische Sensoren werden insbesondere in Einweg-, Misch- und Bioreaktoren bzw. -behältern in der Medizintechnik und Biotechnologie eingesetzt. In diesen und ähnlichen Anwendungsgebieten ist es oft nötig, einen Behälter vor der Benutzung zu sterilisieren. Auf dem Gebiet der Einwegprodukte hat sich eine Sterilisation mittels Strahlung, insbesondere Gamma-Strahlung, bewährt, welche jedoch schädlich für optische Sensoren ist. Dies betrifft insbesondere auf porösen Matrizes basierende optische Sensoren, wie beispielsweise fluoreszenzbasierte pH-Sensoren. Daher wird für derartige Sensoren ein effektives Schutzsystem benötigt, das zugleich kostengünstig realisierbar ist.

Aus WO 02/056023 A1 und DE 10 051 220 A1 sind optische Sensoren zur Messung mindestens eines Parameters in einer Probe bekannt. Diese Sensoren basieren auf einer Vorrichtung zur Anregung der Fluoreszenz eines in einem Probengefäß bzw. Reaktor in einer Matrix immobilisierten Analyt-sensitiven Fluoreszenzfarbstoffes, der in zumindest indirektem Kontakt zur Probe steht, und einer Auswertungsvorrichtung für das resultierende Fluoreszenzantwortsignal. Die Auswertung bzw. die Bestimmung der Analyt-Konzentration kann hierbei sowohl durch die Verwertung der Fluoreszenzabklingzeit als auch der Fluoreszenzintensität erfolgen. Nachteilig ist, dass derartige pH-Sensorpatches, basierend auf einer hydrophilen Trägermatrix, wie z.B. imprägnierten Papieren oder Sol-Gel-Matrizes, bei einer Strahlen-Sterilisation dosisabhängig geschädigt werden. Es verringern sich sowohl die Intensität der Fluoreszenz des Farbstoffs bzw. der Farbstoffe, als auch die Sensitivität des Sensorpatches gegenüber der Messgröße.

Aus US 7,390,462 B2 ist ein Sensor bekannt, bei dem der Fluoreszenzfarbstoff in einer hydrophilen Matrix immobilisiert vorliegt. Hierbei wird ein Sensor mit dem pH-sensitiven Fluoreszenzfarbstoff MA-HPDS in einem Hydrogel vorliegend beansprucht. Auch hierbei ist nachteilig, dass derartige hydrophile optische Sensoren bei einer Sterilisation mit Gammastrahlung dosisabhängig geschädigt werden. Eine solche Strahlung wird insbesondere in der Labortechnologie bei Behältern aus Polymeren angewendet. Es verringern sich sowohl die Intensität der Fluoreszenz des Farbstoffs bzw. der Farbstoffe, als auch die Sensitivität des Sensors gegenüber der Messgröße. Eine besonders starke Schädigung eines solchen Sensorpatches tritt auf, wenn er während der Strahlen-Sterilisation in Kontakt mit einem größeren Volumen an Luft, bzw. auch mit üblichen Schutzgasen, wie z.B. Stickstoff oder Argon, steht. Bei der Strahlen-Sterilisation werden die Gase teilweise ionisiert, bzw. es entstehen freie Radikale. Diese Radikale reagieren beispielsweise bei der Sterilisation eines gasgefüllten Polymer-Beutels an den Wänden oder auch an den Sensoroberflächen ab. Auf porösen, hydrophilen Matrizes basierende Sensoren sind hierfür besonders anfällig, da die Sensorchemie prinzipbedingt an der Oberfläche, bzw. inneren Oberfläche der Matrix immobilisiert vorliegen muss, damit die zu vermessende Probe mit der Sensorchemie in Kontakt kommen kann. Das Ausmaß der Schädigung hängt einerseits von der Bestrahlungsdosis und andererseits vom Verhältnis der Oberfläche zum Volumen des bestrahlten, den Sensorpatch enthaltenden, Behälters ab. Dieses Verhältnis bestimmt die Anzahl an Ionen bzw. Radikalen, welche den Sensorpatch bzw. die darin enthaltene Sensorchemie schädigen.

Aus DE 10 2009 003 971.6 ist ein optischer Sensor zur Messung mindestens eines Parameters bekannt, welcher porös mit einer Edelmetallschicht überzogen ist, womit eine Abreaktion von reaktiven Teilchen an der Edelmetallschicht erreicht wird. Hierbei ist jedoch nachteilig, dass sich eine derartige Beschichtung technisch und mechanisch aufwendig gestaltet und mit hohen Kosten verbunden ist, was insbesondere im Bereich von Einwegprodukten zu vermeiden ist.

Die US 2007/0185472 A1 beschreibt eine Verbindungseinheit aus zwei Konnektoren (10, 12, Figur 5), durch die ein Sensor (34) parallel zu einer nicht dargestellten zylindrischen Achse des im Wesentlichen zylindrischen Sensors (34) und senkrecht in Bezug auf die Verbindungsachse (44) der beiden Konnektoren (10, 12) bewegt wird.

Um eine sterile Verbindung der beiden Bauteile zu ermöglichen und zum Schutz des Sensors, sind an beiden Bauteilen sterile Abdeckungen (22, 30) vorgesehen, die nach der Verbindungsherstellung der Bauteile einen Durchlass für das vertikale Einschieben des Sensors freigeben.

Der vorliegenden Erfindung liegt daher die Aufgabe zugrunde, eine Sensorschutzvorrichtung für einen optischen Sensor zu schaffen, womit die Empfindlichkeit des optischen Sensors gegenüber Strahlung, insbesondere Gammastrahlung, herabgesetzt ist, und welche kostengünstig und einfach realisierbar ist.

Die Aufgabe wird durch eine Sensorschutzvorrichtung gemäß Anspruch 1 gelöst. Die erfindungsgemäße Sensorschutzvorrichtung weist ein Oberteil und ein Unterteil auf. Das Oberteil weist mindestens eine Öffnung auf. Das Unterteil weist mindestens einen optischen Sensor auf. Der optische Sensor und die Öffnung sind voneinander versetzt stellbar. Im geschlossenen Zustand deckt das Oberteil den Sensor ab. Somit ist dieser beispielsweise gegen mechanische Einflüsse geschützt. Durch Verschiebung ist der optische Sensor zu der Öffnung hin bewegbar und der Sensor ist somit für das Medium zugänglich Nach der Erfindung ist das Oberteil gegenüber dem Unterteil drehbar gelagert. Der optische Sensor ist zu der Öffnung hin mittels Drehung verschiebbar. Hierbei ist z.B. ein Drehgelenk oder ein Kugelgelenk möglich.

Nach einer besonders bevorzugten Ausführungsform der Erfindung weist das Unterteil mindestens einen Vorsprung auf, welcher einen oder mehrere optische Sensoren enthält. Der Vorsprung stellt beispielsweise einen Schutz für den optischen Sensor dar.

Bei einem weiteren bevorzugten Ausführungsbeispiel ist der Vorsprung kleiner als die Öffnung. Somit ist in geöffnetem Zustand der Vorsprung durch die Öffnung schiebbar.

In einer weiteren besonders bevorzugten Ausführungsform schließt die Oberfläche des Unterteils mit der Oberfläche des optischen Sensors bündig ab. Somit ist ein Kontakt des optischen Sensors mit durch Strahlensterilisation entstehenden reaktiven Ionen oder anderen Mitteln und Stoffen minimiert.

Gemäß einer besonders bevorzugten Ausführungsform drückt eine veränderliche Kraft das Unterteil an das Oberteil. Somit ist gewährleistet, dass der optische Sensor nicht unvorhergesehen an die Öffnung gelangt. Bei Vorhandensein eines Vorsprunges drückt die veränderliche Kraft das Unterteil in Richtung des Oberteils und den Vorsprung, an oder in dem sich mindestens ein optischer Sensor befindet, an das Oberteil. Ein Vorsprung, der kleiner ausgeführt ist als die Öffnung, wird bei einer Verschiebung in Richtung der Öffnung durch diese hindurchgedrückt und arretiert. Der Vorsprung befindet sich dann außerhalb und ist gut zugänglich für zu messende Medien. Die veränderliche Kraft kann hierbei beispielsweise eine durch eine Feder ausgeübte Federkraft, pneumatische oder hydraulische Kraft sein.

In einer weiteren vorteilhaften Ausgestaltung der Erfindung sind das Oberteil und das Unterteil aus Kunststoff gefertigt, was die Herstellungskosten senkt.

Gemäß einer bevorzugten Ausführungsform der Erfindung ist der optische Sensor im geschlossenen Zustand der Vorrichtung durch Strahlung unter Erhalt seiner Funktionsfähigkeit sterilisierbar. Die Empfindlichkeit gegenüber einer Sterilisierung, beispielsweise mittels ionisierender Strahlung, Gammastrahlung, UV-C-, Beta- oder Elektronenstrahlung ist durch die Sensorschutzvorrichtung herabgesetzt. Durch die Minimierung des Volumens an Gas in umgebender Nähe zum optischen Sensor, verringert sich entsprechend die Anzahl daraus gebildeter reaktiver Teilchen, welche durch eine Strahlensterilisation entstehen und welche Zugang zu dem optischen Sensor haben und mit dessen Matrix und dem Fluoreszenzfarbstoff bzw. den Fluoreszenzfarbstoffen reagieren. Somit wird ein besseres Signal-Rausch-Verhältnis, sowie eine allgemein höhere Sensitivität des optischen Sensors gegenüber seiner Messgröße erreicht. Die Messgrößen können hierbei beispielsweise der pH-Wert, die Gelöstsauerstoffkonzentration oder andere Parameter sein. Die Sensorschutzvorrichtung ist nach der Strahlensterilisation bzw. vor der Verwendung des Behälters, beispielsweise als Bioreaktor, öffenbar, ohne die Sterilbarriere des Behälters zu brechen.

Nach einer besonders bevorzugten Ausführungsform der Erfindung wird die Sensorschutzvorrichtung in chemischen oder biologischen Anlagen verwendet, wie beispielsweise in einem Bioreaktor. Hierbei wird diese zur Bestimmung mindestens eines Parameters, wie beispielsweise des pH-Wertes oder der Gelöstsauerstoffkonzentration, verwendet.

Die Figuren 1a bis 4 zeigen unterschiedliche Ausführungsformen der Sensorschutzvorrichtung. In den Zeichnungen zeigen:
- Figur 1a: einen schematischen Querschnitt durch ein Ausführungsbeispiel der Sensorschutzvorrichtung in geschlossenem Zustand, wobei eine Feder den optischen Sensor an das Oberteil presst,
- Figur 1b: eine Draufsicht auf ein Ausführungsbeispiel der Sensorschutzvorrichtung nach Figur 1a,
- Figur 2a: einen schematischen Querschnitt durch ein Ausführungsbeispiel der Sensorschutzvorrichtung in geöffnetem Zustand,
- Figur 2b: eine Draufsicht auf ein Ausführungsbeispiel der Sensorschutzvorrichtung nach Figur 2a,
- Figur 3: einen schematischen Querschnitt durch ein Ausführungsbeispiel der Sensorschutzvorrichtung in geschlossenem Zustand und
- Figur 4: einen schematischen Querschnitt durch ein Ausführungsbeispiel der Sensorschutzvorrichtung in geöffnetem Zustand.

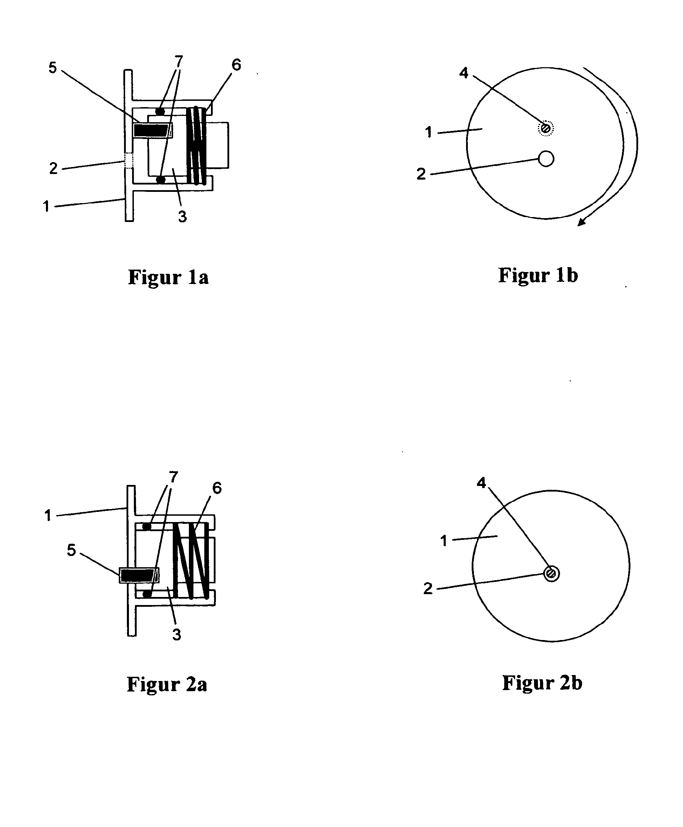

Gemäß Figur 1a bis Figur 4 besteht die Sensorschutzvorrichtung aus einem Oberteil **1** und einem Unterteil **3.** Der optische Sensor **4** ist in bzw. an einem Vorsprung **5** angebracht, welcher mit dem Unterteil **3** verbunden ist. Mittels Rotation, welche in Pfeilrichtung dargestellt ist, ist der optische Sensor zu der Öffnung bewegbar. Dichtungen **7,** beispielsweise ein oder mehrere O-Ringe, verhindern einerseits das Austreten des Mediums aus dem Behälter und andererseits eine Kontamination des Mediums mit beispielsweise Luftkeimen.

Gemäß den Figuren 1a bis 2b ist eine Feder **6** an die Sensorschutzvorrichtung angebracht. Figur 1a zeigt einen schematischen Querschnitt durch ein Ausführungsbeispiel der Sensorschutzvorrichtung in geschlossenem Zustand, wobei eine Feder **6** das Unterteil **3** und somit auch den Vorsprung **5** zusammen mit dem optischen Sensor **4** an das Oberteil **1** presst. Somit ist beispielsweise ein ungewolltes Öffnen während der Sterilisation vermeidbar. Figur 1b ist eine Draufsicht auf ein Ausführungsbeispiel der Sensorschutzvorrichtung nach Figur 1a. Hierbei ist die spiegelsymmetrisch Stellung von Öffnung **2** und optischem Sensor **4** bzw. Vorsprung **5** erkennbar. Ebenso ist eine Ausführungsform mit mehreren Öffnungen und Vorsprüngen bzw. optischen Sensoren möglich.

Figur 2a zeigt einen schematischen Querschnitt durch ein Ausführungsbeispiel der Sensorschutzvorrichtung in geöffnetem Zustand. Die Feder **6** drückt den kleiner als die Öffnung **2** gehaltenen Vorsprung **5** nach Außen, bzw. in das Behälterinnere. Figur 2b zeigt eine Draufsicht auf ein Ausführungsbeispiel der Sensorschutzvorrichtung nach Figur 2a.

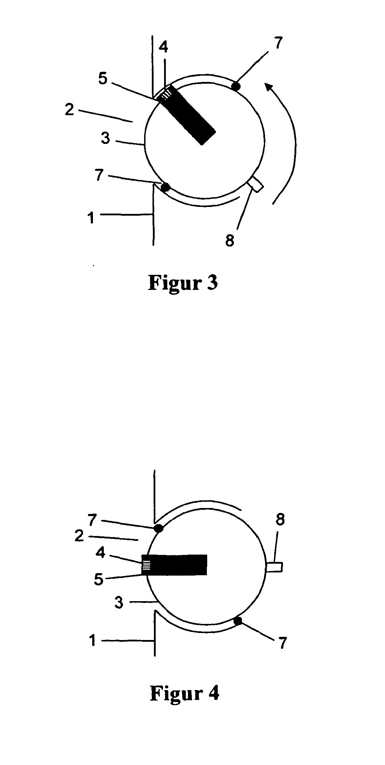

Gemäß den Figuren 3 und **4** bilden das Oberteil **1** und das Unterteil **3** ein Drehgelenk, welches auch als Kugelgelenk ausführbar ist. Das Oberteil **1** fungiert als Gelenkpfanne. Das Unterteil **3** fungiert als Gelenkkopf und enthält den mindestens einen optischen Sensor **4**, welcher in bzw. an einem Vorsprung **5** sitzt. Ein Schaft **8** erleichtert das Öffnen bzw. Schließen der Sensorschutzvorrichtung. Dichtungen **7** gewährleisten ein Öffnen und Schließen ohne die Sterilbarriere des Behälters zu brechen. Figur 3 zeigt einen schematischen Querschnitt durch ein Ausführungsbeispiel der Sensorschutzvorrichtung in geschlossenem Zustand. Eine Drehung des Unterteils **3** in Pfeilrichtung öffnet die Sensorschutzvorrichtung. Figur 4 zeigt einen schematischen Querschnitt durch ein Ausführungsbeispiel der Sensorschutzvorrichtung in geöffnetem Zustand.

## Patentansprüche

1. Sensorschutzvorrichtung aufweisend ein Oberteil (1) mit mindestens einer Öffnung (2) und ein Unterteil (3) mit mindestens einem optischen Sensor (4), wobei der optische Sensor (4) in seiner Ausgangsstellung gegenüber der Öffnung (2) versetzt eingestellt ist und mittels Verschieben zu der Öffnung (2) des Oberteils (1) hin beweglich ist, wobei das Oberteil (1) gegenüber dem Unterteil (3) drehbar gelagert ist.

2. Sensorschutzvorrichtung nach Anspruch 1, wobei das Unterteil (3) mindestens einen Vorsprung (5) aufweist, welcher den mindestens einen optischen Sensor (4) aufweist.

3. Sensorschutzvorrichtung nach Anspruch 2, wobei der Vorsprung (5) kleiner ist als die Öffnung (2).

4. Sensorschutzvorrichtung nach Anspruch 1, wobei die Oberfläche des Unterteils (3) mit der Oberfläche des optischen Sensors (4) bündig abschließt.

5. Sensorschutzvorrichtung nach einem der vorhergehenden Ansprüche, wobei eine veränderliche Kraft das Unterteil (3) an das Oberteil (1) drückt.

6. Sensorschutzvorrichtung nach Anspruch 5, wobei die veränderliche Kraft eine durch eine Feder (6) ausgeübte Federkraft ist.

7. Sensorschutzvorrichtung nach Anspruch 5, wobei die veränderliche Kraft eine durch ein pneumatisches oder hydraulisches System ausgeübte Kraft ist.

8. Sensorschutzvorrichtung nach einem der vorhergehenden Ansprüche, wobei das Oberteil (1) und das Unterteil (3) aus Kunststoff gefertigt sind.

9. Sensorschutzvorrichtung nach einem der vorhergehenden Ansprüche, welche durch Strahlung unter Erhalt der Funktionsfähigkeit des optischen Sensors (4) steril zu machen ist.

10. Sensorschutzvorrichtung nach Anspruch 9, wobei die Strahlung ionisierende, Gamma- oder Elektronenstrahlung ist.

11. Verwendung einer Sensorschutzvorrichtung nach einem der vorhergehenden Ansprüche in chemischen oder biologischen Anlagen.

12. Verwendung einer Sensorschutzvorrichtung nach Anspruch 11, wobei die chemische oder biologische Anlage ein Bioreaktor ist und die Sensorschutzvorrichtung zum Bestimmen mindestens eines Parameters in dem Bioreaktor eingesetzt wird.

## Claims

1. Sensor protection device comprising an upper part (1) with at least one opening (2) and a lower part (3) with at least one optical sensor (4), wherein the optical sensor (4) in its initial setting is set to be offset relative to the opening (2) and is movable by means of displacement towards the opening (2) of the upper part (1), wherein the upper part (1) is mounted to be rotatable relative to the lower part (3).

2. Sensor protection device according to claim 1, wherein the lower part (3) has at least one projection (5) having the at least one optical sensor (4).

3. Sensor protection device according to claim 2, wherein the projection (5) is smaller than the opening (2).

4. Sensor protection device according to claim 1, wherein the surface of the lower part (3) is flush with the surface of the optical sensor (4).

5. Sensor protection device according to any one of the preceding claims, wherein a variable force presses the lower part (3) against the upper part (1).

6. Sensor protection device according to claim 5, wherein the variable force is a spring force exerted by a spring (6).

7. Sensor protection device according to claim 5, wherein the variable force is a force exerted by a pneumatic or hydraulic system.

8. Sensor protection device according to any one of the preceding claims, wherein the upper part (1) and the lower part (3) are made of plastics material.

9. Sensor protection device according to any one of the preceding claims, which is to be rendered sterile by irradiation while maintaining the functional capability of the optical sensor (4).

10. Sensor protection device according to claim 9, wherein the radiation is ionising gamma or electron radiation.

11. Use of sensor protection device according to any one of the preceding claims in chemical or biological plants.

12. Use of a sensor protection device according to claim 11, wherein the chemical or biological plant is a bioreactor and the sensor protection device is used for determining at least one parameter in the bioreactor.

## Revendications

1. Dispositif de protection d'un capteur présentant une partie supérieure (1), comprenant au moins une ouverture (2), et une partie inférieure (3) comprenant au moins un capteur optique (4), le capteur optique (4) étant réglé, déplacé par rapport à l'ouverture (2), dans sa position de départ et étant mobile en direction de l'ouverture (2) de la partie supérieure (1) au moyen d'un coulissement, la partie supérieure (1) étant disposée, en pouvant tourner, en face de la partie inférieure (3).

2. Dispositif de protection d'un capteur, la partie inférieure (3) présentant au moins une avancée (5) qui présente au moins un capteur optique (4).

3. Dispositif de protection d'un capteur selon la revendication 2, l'avancée (5) étant plus petite que l'ouverture (2).

4. Dispositif de protection d'un capteur selon la revendication 1, la surface de la partie inférieure (3) fermant en affleurant avec la surface du capteur optique (4).

5. Dispositif de protection d'un capteur selon l'une des revendications précédentes, une force variable pressant la partie inférieure (3) contre la partie supérieure (1).

6. Dispositif de protection d'un capteur selon la revendication 5, la force variable étant une force élastique exercée par un ressort (6).

7. Dispositif de protection d'un capteur selon la revendication 5, la force variable étant exercée par un système pneumatique ou hydraulique.

8. Dispositif de protection d'un capteur selon l'une des revendications précédentes, la partie supérieure (1) et la partie inférieure 3) étant fabriquées en matière synthétique.

9. Dispositif de protection d'un capteur selon l'une des revendications précédentes qui peut être rendu stérile par un rayonnement en conservant la capacité de fonction du capteur optique (4).

10. Dispositif de protection d'un capteur selon la revendication 9, le rayonnement étant un rayonnement ionisant, gamma ou électronique.

11. Utilisation d'un dispositif de protection d'un capteur selon l'une des revendications précédentes dans des installations chimiques ou biologiques.

12. Utilisation d'un dispositif de protection d'un capteur selon la revendication 11, l'installation chimique ou biologique étant un bioréacteur, et le dispositif de protection du capteur étant employé pour la détermination d'au moins un paramètre dans le bioréacteur.
